# EUROPEAN PATENT APPLICATION

(11) **EP 2 559 881 A2**
(43) Date of publication of application: **20.02.2013**
(21) Application number: 12179698.1
(22) Date of filing: 08.08.2012
(51) Int. Cl.: F02C 6/16, F02C 7/143

(54) **Adiabatic compressed air energy storage system and corresponding method**

(30) Priority: 16.08.2011 GB 201114043
(71) Applicant: Alstom Technology Ltd, 5400 Baden (CH)
(72) Inventor: Bove, Roberto, 8050 Zürich (CH); Koller, Martin, 5103 Wildegg (CH)

(57) **Abstract**

During operation of an adiabatic compressed air energy storage (ACAES) system (50), energy imbalances may arise between thermal energy storage (TES,60) in the (ACAES) system and the amount of thermal energy required to raise the temperature of a given volume of compressed air to a desired turbine entry temperature Tᵢ after the air has been discharged from compressed air storage (62) of the ACAES system (50). To at last partially redress such an energy imbalance it is proposed to selectively supply additional thermal energy to the given volume of compressed air after it has received thermal energy from the TES (60) and before it expands through the turbine (58). The additional thermal energy is supplied from a source external to the ACAES system, such as fuel burnt in a combustor (56). The amount of thermal energy added to the given volume of compressed air after it has received thermal energy from the TES is much smaller than the amount of useful work obtained from the given volume of compressed air by the turbine (58).

## Description

### Technical Field

The present disclosure relates to the field of Compressed Air Energy Storage (CAES) systems, and in particular to energy balancing of Adiabatic CAES (ACAES) systems.

### Background

CAES systems can be used to store large amounts of energy. During the "charging" phase of operation, air is compressed to high pressures and stored in one or more large chambers or caverns using electrically powered pumps or compressors during periods when electricity demand is low, e.g., during the night, when available on-line generating capacity exceeds demand. During the "discharging" phase of operation of CAES systems, the stored compressed air is used to drive turbines connected to generators and thereby feed electricity into the utility grid during periods when electricity demand is in danger of surpassing the grid's ability to supply. One particularly relevant instance of such an application arises in the area of electricity generation from renewable energy sources (e.g., wind and solar), where in the absence of arrangements for storing their energy while they are working, and releasing it while they are not working or producing low power levels, it is not possible to guarantee stable levels of electricity production from such sources for extended periods. In the context of electricity production for the utility grid, which must meet the requirements of peaks in demand for electricity on a daily cycle, such lack of stability and predictability may put renewable energy source power generation systems at a significant disadvantage compared to fossil and nuclear fuelled power stations.

For prior art examples of CAES systems, see, e.g., US Patents Nos. 4,100,745; 3,895,493; 3,988,897.

As mentioned, CAES systems provide a means of providing such energy storage. Two forms of CAES are currently known: diabatic, and adiabatic. First generation CAES systems were diabatic (DCAES) and involve using a fuel, such as natural gas, to mix and combust with the compressed air to run the turbine at higher efficiencies. Adiabatic CAES (ACAES) systems, on the other hand, store thermal energy, created as a result of the initial compression of the air, in a separate thermal energy store. This heat is then later used to raise the temperature of the released air before it is passed through the turbine, enabling the turbine to operate at higher levels of efficiency (see, for example, US Patents Nos. 3,677,088 and 4,147,204). Therefore, unlike DCAES systems, ACAES systems have been designed not to need fuel augmentation.

Compression in an ACAES system heats the air to high temperatures, and Thermal Energy Storage units (TES) are used to cool this compressed air by extracting and storing the thermal energy of the heat of compression. Problems arise in that an adiabatic compression of a given volume of air from 1 to 100 bar, for example, would heat that air from 25°C to about 837°C. However, compressors capable of withstanding such a high outlet temperature are either not commercially available or not available at a cost-effective price. Therefore, using commercially available compressors, the compression is performed using multistage intercooled axial and radial compressors to reduce the maximum discharge temperature. This arrangement, however, leads to drawbacks such as: increased capital cost due to the presence of heat exchangers and additional thermal energy storage units; increased pressure losses due to multistage compression and expansion; increased system complexity; and, limited energy density of the system due to limited rated power.

Furthermore, at high pressure and low temperature, humidity in the air is likely to condense in the (or each) thermal energy storage unit, depending on ambient conditions. This condensation leads to a resultant cooling of the TES and a loss of a portion of the thermal energy thereof.

### Summary

In a first aspect of the present disclosure there is proposed an adiabatic compressed air energy storage (ACAES) system including:
compressed air storage;
air compression means for charging the compressed air storage with compressed air;
thermal energy storage (TES);
turbine means for extracting useful work from the compressed air during discharge of the compressed air from the compressed air storage; and
energy balancing means for redressing an energy imbalance between the TES and a required amount of thermal energy to raise the temperature of a given volume of compressed air to a desired temperature upon discharge of the given volume of compressed air from the compressed air storage;
the energy balancing means comprising an energy input device selectively operable to supply additional thermal energy to the given volume of compressed air after it has received thermal energy from the TES and before it expands through the turbine means, said additional thermal energy being supplied from a source external to the ACAES system, the amount of thermal energy added to the given volume of compressed air after it has received thermal energy from the TES being smaller than the amount of useful work obtained from the given volume of compressed air by the turbine means.

The thermal energy input device may be arranged to add thermal energy directly to the compressed air. For example, the thermal energy input device may comprise at least one of: (a) a combustor operable to burn fuel in the flow of compressed air; (b) an electrical heating element situated in the flow of compressed air; (c) a solar power source inputting thermal energy to the flow of compressed air as it passes through a hermetically sealed solar power receiver.

Alternatively, the thermal energy input device may be arranged to add thermal energy to the compressed air via heat exchange means. For example, an intermediate heat exchange medium, such as water or molten salt, may be circulated through a first side of a heat exchanger that is receiving heat from the thermal energy input device and may then be circulated through a second side of the heat exchanger that is giving up the heat to the compressed air. In this case, the energy input device may comprise at least one of: (a) a combustor operable to burn fuel externally of the pressurised part of the ACAES system and input the heat of combustion to the intermediate heat exchange medium; (b) an electrical heating element arranged to input heat to the intermediate heat exchange medium; (c) a solar power source inputting thermal energy to a hermetically sealed solar power receiver inputting heat to the intermediate heat exchange medium and acting as the first side of the heat exchanger; (d) a geothermal power source arranged to input heat to the intermediate heat exchange medium.

It is counterintuitive that having devised ACAES systems in order to eliminate the need to add thermal energy to the compressed air discharged from the cavern, reintroduction of fuel burning or use of other external energy inputs can be proposed as an improvement for ACAES systems. However, it is explained herein how such improvement can be obtained by judicious thermal input to assist in restoring thermal energy balance in ACAES systems.

Note that after the discharged compressed air has been heated-up in the heat storage, the combustor or other heat source provides heat at a higher temperature, thus reducing exergetic losses. We define the exergy of a system as the maximum useful work possible during a process that brings the system into equilibrium with a heat reservoir.

Likely causes of the aforesaid energy imbalance may be one or more of the following in the ACAES system: a) a loss of thermal energy from a TES of the ACAES system, e.g., through condensation of water vapour therein; b) insufficient transfer of thermal energy to the TES after compression of the compressed air, c) a loss of compressed air from compressed air storage due to leakage therefrom; d) a loss of mass of compressed air in the compressed air storage, due to condensation of water vapour therein.

It is contemplated that the ACAES system may further comprise auxiliary means for balancing energy between the heat storage and air storage components of the ACAES system, such as one or more of:
means for temporarily interrupting thermal storage in the TES during charging of the compressed air storage;
means for throttling input of compressed air to the TES during discharge of air from the compressed air storage; and
means for venting compressed air from the compressed air storage instead of discharging it through the TES.

In a second aspect, the present disclosure proposes a method of redressing an energy imbalance between thermal energy storage (TES) of an adiabatic compressed air energy storage (ACAES) system and a required level of thermal energy to raise the temperature of a given volume of compressed air to a desired temperature after the air has been discharged from compressed air storage of the ACAES system, the method comprising the step of selectively supplying additional thermal energy to the given volume of compressed air after it has received thermal energy from the TES and before it expands through turbine means of the ACAES system, said additional thermal energy being supplied from a source external to the ACAES system, the amount of thermal energy added to the given volume of compressed air after it has received thermal energy from the TES being smaller than the amount of useful work obtained from the given volume of compressed air by the turbine means.

Further aspects of our proposals will be apparent from a perusal of the following description and the appended claims.

### Brief Description of the Figures

Preferred embodiments are described below with reference to the accompanying Figures, in which:
Figure 1 illustrates a current Diabatic Compressed Air Storage system in schematic outline;
Figure 2 illustrates a current Adiabatic Compressed Air Storage system in schematic outline; and
Figure 3 illustrate an improved Adiabatic Compressed Air Storage system in schematic outline.

### Detailed Description of Preferred Embodiments

In Adiabatic Compressed Air Energy Storage (ACAES) systems, for various reasons it is possible that the potential energy of the air stored in the cavern(s) is insufficient, even when combined with the thermal energy stored in the thermal energy store(s) (TES), to power a turbine at a high efficiency for electricity production. To overcome, or at least ameliorate this problem, we propose an improved ACAES system including means selectively operable to balance the thermal energy stored in the TES with an energy requirement associated with heating a given volume of compressed air to a desired and, preferably, optimum temperature for driving a turbine for the purposes of, for example, electricity generation.

In a preferred embodiment, the ACAES system includes a heating device for augmenting a level of thermal energy that is stored within a Thermal Energy Storage unit (TES) of the ACAES system. Various such means are contemplated and include, amongst others, a combustor, such as a gas burner or a solid fuel burner, electrical resistance heating, geothermal power, or solar power.

Furthermore, it may be expedient to provide means operable during the charging part of the cycle to control the amount of thermal energy transferred from the compressed air to the TES; for example by selectively causing the air to by-pass the TES. Alternatively, or in addition, means operable during the discharge part of the cycle may be provided to selectively control the amount of thermal energy transferred from the TES to the compressed air, for example, by throttling the rate of flow through the TES, or by venting excess air from the cavern.

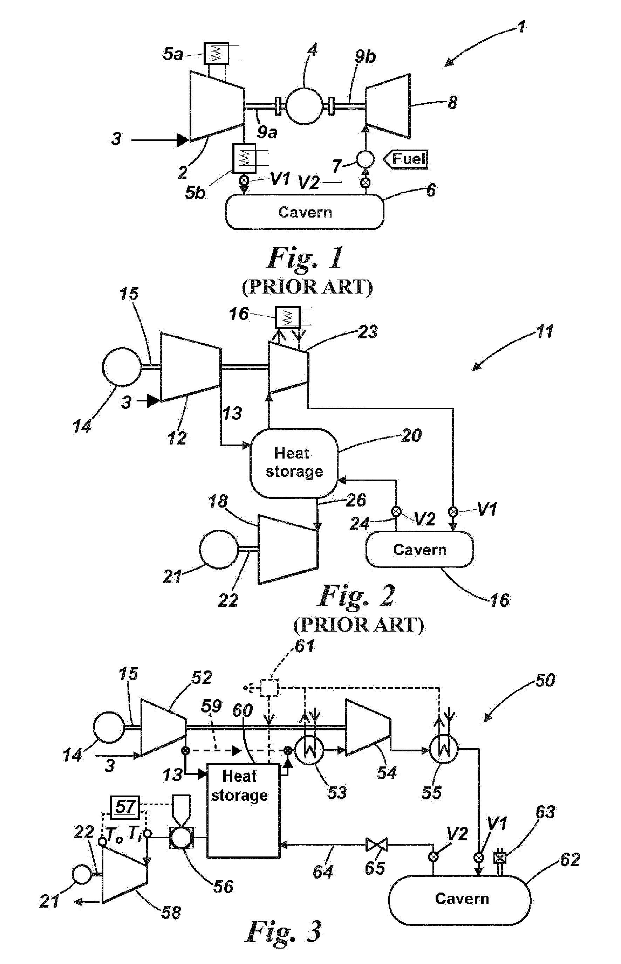

The following description, with reference to Figures 1 and 2, sets out the features and operation of current Diabatic and Adiabatic CAES systems. The description then follows on to discussion, with reference to Figure 3, of the present improvement and how the features and operation thereof build upon the current systems to advantageous effect.

With reference to Figure 1, a simple generic DCAES system 1 comprises a compressor 2 that is operable to pressurise an input flow of air 3, and a reservoir 6 into which the pressurised air is directed through a non-return valve V1 and retained, the reservoir 6 comprising a pressure-tight vessel such as a suitably adapted cavern. The compressor 2 is driven through a drive shaft 9a by a drive means such as an electric motor, e.g., a motor/generator 4. The motor is supplied with electricity from e.g., the utility grid or a renewable energy electrical generation site, such as a wind farm. Compression of the air increases its thermal and potential energy. In a DCAES system, the increased thermal energy is extracted from the compressed air using a heat transfer device, such as an intercooler 5a and/or a post-compression heat exchanger 5b, but the extracted heat is not stored. The air, once compressed and cooled, is transferred at a reduced temperature to the cavern 6. The energy stored in a DCAES system is therefore mainly only the potential (pressure) energy of the air. When it is desired that that potential energy be converted into useful work, such as for the generation of electricity, a desired portion of the compressed volume of air in the cavern 6 is released through valve V2 and ducted to a turbine 8. For electricity production, turbine 8 is mechanically coupled through drive shaft 9b to a generator, in this case motor/generator 4, also operable to drive the compressor 2.

The turbine 8 converts the potential energy stored in the pressurised air into torque in output driveshaft 9b. The efficiency of the turbine 8 increases with increased input temperature, and it is therefore advantageous that the pressurised air be heated to, preferably, an optimal temperature to maximise the efficiency of the turbine. The temperature of the pressurised air is supplied by a heating means 7, such as a gas burner. The heat is transferred to the pressurised air thereby raising its temperature and thereby increasing the efficiency of the turbine.

The DCAES system 1 therefore inherently requires an "overhead" of additional energy input in order to efficiently convert its stored potential energy into useful work. This overhead increases costs and reduces the overall system efficiency when considered from the viewpoint of total power being used to compress the air against the total power being generated at the generator 4.

Figure 2 illustrates a simple ACAES system 11 intended to mitigate the above disadvantages, in which compressor 12 is driven by a motor 14 via a drive shaft 15 to compress the input air 3. The compressed air 13 is then passed through heat exchange passages in a thermal energy storage material within a Thermal Energy Store (TES) 20, which stores the heat of compression of the compressed air 13. The heat storage material in TES 20 may comprise a solid or a liquid material such as, amongst others, stone, concrete, and molten salt. For high air flow temperatures in the region of 600°C, molten salt is a preferable choice of TES material.

The ACAES system 11 of Figure 2 further comprises a second stage of compression in the form of a compressor 23 equipped with an intercooler 16. Compressor 23 is driven on the same shaft 15 as compressor 12, and further compresses the air from compressor 12 to a desired pressure for storage after TES 20 has cooled the air. Moreover, due to the action of an intercooler 16, the further compressed air at the outlet from compressor 23 is also at a desired temperature for storage, and it is admitted into the cavern 16 through non-return valve V1.

Stored compressed air 24 is discharged from the cavern 16 through valve V2 when there is a need to convert the potential energy of the stored air into useful work. Instead of burning fuel, however, the ACAES system 11 uses the thermal energy stored in the TES 20 to raise the temperature of the pressurised air 24 passing through its internal passages. The reheated compressed air 26 is then expanded through turbine 18 to generate electricity in generator 21, driven by turbine 18 through shaft 22. Thus, in this case, additional fuel, or other energy source , is not used to assist in generation of electricity from the compressed air in the cavern 16.

Such an ACAES system 11 is, however, prone to loss of energy from the system, e.g., through the loss of thermal energy from the TES 20 due to imperfect insulation, or through the escape of some portion of the compressed air from the cavern 16, or due to condensation of water vapour content of the compressed air on the walls of the cavern. These losses cause an imbalance to arise between the amount of available thermal energy in the TES 20 and an amount of energy required to bring the compressed air in the cavern 16 up to a desired temperature for passing through an electricity generating turbine 18 at a desired level of efficiency.

Figure 3 illustrates an improved ACAES 50 system that comprises means for overcoming or at least mitigating this issue. The ACAES system 50, according to a preferred embodiment, provides a first compressor 52 that is operable to compress an input stream of air 3 to a pressure of, for example, 30 to 35 bars. During the course of this compression, the air is raised to a temperature of about 550-600°C . This first compressor 52 may be an axial compressor or a radial compressor, but to achieve maximum compression and temperature performance, compressor 52 is preferably a robust axial compressor derived from the compressor of a heavyweight gas turbine engine of the type used in power stations, e.g., the ALSTOM GT26, and therefore having long-term operational capabilities at high temperatures and pressures.

Preferably, the compressor is driven by a motor 14 via a driveshaft 15. The motor 14 may be any form of motor operable to create torque in the driveshaft 15, but is preferably an electric motor.

The hot compressed air 13 flows from an output of the first compressor 52 through TES 60, where the heat of compression is stored, as already described in relation to Figure 2.

It may sometimes occur that during charging and discharging cycles of the ACAES 50, the TES 60 may accumulate an excess of thermal energy in comparison with the energy of the stored air in cavern 62. This can conveniently be dealt with during the charging part of the cycle by selectively using a by-pass 59 of the TES 60, thereby temporarily interrupting thermal storage.

Before passing to a second compressor 54 for a second stage of compression, a temperature control device 53, such as an intercooler, is provided at an outlet of the TES 60. This temperature control device 53 is operable to adjust the inlet temperature to the second compressor to a variable optimum value that enables the second compressor to deliver pressurised air to the cavern 62 at a desired temperature. This desired temperature can range from 20 to 150°C, and depends on the pressure in the cavern, as well as ambient air temperature, and operating conditions (nominal or part-load). Preferably, any thermal energy extracted from the pressurised air by this temperature control device 53, prior to its input into a second compressor 54, is transferred to the TES 60 using, for example, a heat pump 61, shown diagrammatically in dashed lines.

Once the appropriate inlet temperature for the second compressor 54 is achieved, the pressurised air passes into the second compressor 54 for a further stage of compression. The second compressor 54 may differ from the first compressor 52 in its construction. For example, it is envisaged that the second compressor may be a radial or axial compressor of the type commercially available for the chemical or oil & gas industries, the aim being to achieve a predetermined output pressure and temperature suitable for input to the cavern, but which is also compatible with the compressor's long-term operational capabilities, The second compressor 54 is either driven by the driveshaft 15 from the motor 14, or alternatively by a second, separate motor and driveshaft (not shown).

Once further compressed by the second compressor 54, preferably to a pressure of 60 to 80 bar, the pressurised air is then passed through a second temperature controlling device, such as an intercooler 55 or other form of heat exchanger. By operation of this intercooler 55 the temperature of the pressurised air is adjusted to a desired temperature for storage in the cavern 62. Preferably, any thermal energy extracted from the pressured air by the intercooler 55 is transferred to the TES 60 by means, for example, of the heat pump 61.

The pressurised air enters cavern 62 through non-return valve V1 and is stored for a period determined by level of demand from the utility grid. The cavern 62 is typically an underground volume such as a suitably adapted limestone cave, disused mine or salt cavern. Alternatively, it could be a vessel such as a high pressure gas tank, or a pressurised container such as a plastic vessel disposed underwater in a lake or the ocean.

When it is desired that a portion of the energy stored in the pressurised air in cavern 62, and the thermal energy in the TES 60, be converted into useful work, such as for the production of electricity, the outlet valve V2 of the cavern 62 is opened to release a portion 64 of the compressed air therefrom, which flows through TES 60. The thermal energy stored in TES 60 heats the compressed air to a temperature that is preferably as close as possible to a desired operating temperature at which the efficiency of a turbine 58 is maximised.

As mentioned above, losses in thermal energy stored in the TES 60, or in potential energy of the air in the cavern 62, may result in an imbalance occurring between the thermal energy available in the TES 60 and a required amount of thermal energy necessary to sufficiently heat all the air discharged from the cavern 62 to the desired temperature. A crude way of correcting an imbalance due to insufficient available thermal energy in the TES would be to vent some air from the cavern. For example, an excess of 10% in the potential energy of the stored air compared to the thermal energy retained in the TES 60, could be rectified by venting out 10% of the air that had been injected into the cavern 62 during the charging phase. Assuming an ACAES system can store 1.5 GWh, the loss of 10% of air corresponds to a loss of production of about 10% of the energy, i.e. 150 MWh.

The reader should understand that issues such as a reduction of the mass of the air in the cavern 62, resulting from condensation of water content thereof, or destratification of a temperature profile in the TES 60, may also compromise the efficiency of the ACAES system 50.

If, during operation of the ACAES system 50, an imbalance occurs between the thermal energy available in the TES 60 and a required amount of thermal energy necessary to raise the temperature of a given volume of compressed air to a desired temperature after the given volume of compressed air has been discharged from the compressed air storage, we propose to at least partially restore the energy balance of the ACAES system 50 by providing an energy balancing means comprising a thermal energy input device to selectively impart limited thermal energy to the compressed air in addition to the energy imparted by TES 60.

The ACAES system may be further supplemented by means for venting a portion of the compressed air from the cavern 62, and/or a means for throttling the compressed air before it enters the turbine 58. The means for venting a portion of the compressed air may comprise an open and shut valve 63, and means for throttling the compressed air may comprise a pressure reducer valve 65.

The aforementioned thermal energy input device is a heat source, preferably a combustor, such as a gas burner 56, provided between the TES 60 and the turbine 58. Burner 56 is operable to combust a gaseous fuel, such as natural gas, to add thermal energy to the compressed air after it exits TES 60. It is contemplated that the burner 56 could operate outside of the pressurised circuit of the ACAES system 50, and could therefore operate at atmospheric pressure. The burner would input heat to an intermediate heat exchange medium circulating through a first side of a heat exchanger (not shown). The heat exchange medium would circulate to a second side of the heat exchanger situated to give up the heat of combustion to the flow of compressed air. Thermal energy from this burner would thereby be transferred, via the heat exchanger, to the pressurised air inside the ACAES system 50 at a point before the air enters an inlet of the turbine 58. Alternatively, burner 56 may be pressurized and disposed within a channel through which the compressed air flow passes, so as to deliver the fuel directly into that flow of air. However, such an embodiment would require a combustion control unit (as known to those skilled in the art) that could adapt known combustion process parameters (e.g., fuel/air ratio and post-combustion dilution) to overcome changes in the pressure of the air flow over time, which would otherwise disadvantageously affect emissions from the combustion process. Such a control unit would also sense temperatures in the system, as described later, and increase or decrease fuel burn as appropriate.

Although the thermal energy input device is specified above as being a combustor, the combustor could be replaced or supplemented by an electrical heating element or a solar power source arranged in the flow of compressed air to input heat directly to the compressed air. Alternatively, the combustor could be replaced or supplemented by an electrical heating element or solar power source arranged externally of the pressurised part of the ACAES system to input heat indirectly to the compressed air via a heat exchange arrangement, by heating an intermediate heat exchange medium. In the case of heat input from a solar power source, the heat input could be provided by a hermetically sealed solar power receiver, which would input thermal energy to the flow of compressed air either directly as compressed air is passed through the receiver, or indirectly via the heat exchange arrangement, by circulating an intermediate heat exchange medium though the receiver acting as the first side of the heat exchanger.

Another possible source of heat input may be a geothermal heat source. In such case, the heat input to the compressed air would be indirect, with the geothermal heat source acting to heat an intermediate heat exchange medium in the first side of the heat exchanger.

It should be understood that the amount of thermal energy added to the system as outlined above is limited to the amount necessary to restore the energy balance between the stored thermal energy and the stored potential energy of the compressed air, hence it is expected that the amount of thermal energy added to a given volume of the compressed air after it has passed through the TES 60 and before it passes through the turbine 58 will be significantly smaller than the amount of useful work obtained by the turbine from that given volume.

Three scenarios, using a combustor to correct energy imbalance in a system such as shown in Figure 3, are set out in the following examples. For each scenario, the energy that would be lost, in the absence of the improvements described herein, is calculated and compared to the additional thermal energy required for operation with the improvements. It will be appreciated that, in all the three cases, the use of natural gas represents an increased operational flexibility: an operator may choose between venting out a portion of the pressurised air following an analysis of the costs of doing so compared to the effects of reduced plant availability, or instead use natural gas. Such a choice may be influenced by a number of factors, including fuel cost, cost of CO₂ emission (if CO₂ emission limits are applicable over the short periods of fuel burning envisaged here), plant availability and price of electricity.

Case 1: This scenario is more likely to arise when the heat storage in TES 60 uses a liquid. At the beginning of the discharging phase, the pressure of the stored air in the cavern 62 is 80 bar. The hot liquid of the TES 60 is at an insufficient temperature to guarantee that the air turbine inlet temperature is above a certain required value for efficient operation. In the absence of a means of addressing the thermal energy deficit, the pressure would need to be reduced, to increase the temperature of the outlet of the turbine 58, thereby to prevent this temperature from falling below an acceptable temperature of, for example, 10°C. Assuming that air is not vented from the cavern, but rather its pressure is reduced by throttling, and that the air temperature at the turbine inlet is only 10°C lower than a minimum permissible level, i.e., the temperature of the TES 60 has lost at least 10°C, the pressure reduction that is needed can be quantified as about 0.5 bar per each °C below the required temperature. (Note that in actual operation there would probably be up to 40°C of temperature loss in the TES, as the TES would be typically operated at 530°C.) In the example of loss of 10 °C in the TES, the pressure of the air should be reduced by 5 bar in the throttling valve 65, i.e. from 80 to 75 bar. This means that in the charging phase, the work done to increase the pressure of the air in the cavern 62 from 75 bar to 80 bar will be wasted. This equates to approximately 125 kJ per kilogram of air in the compressor - in the case of a compressor derived from the ALSTOM GT26 gas turbine engine; this is about 75 MW. If, on the other hand, the temperature of the air as it passes to the inlet of the turbine is increased from, say, 500°C to 510°C using the addition and combustion of natural gas, the required additional thermal energy would be only 10.93 kJ per kg of air. It is, therefore, significantly more efficient to supply this additional thermal energy and raise the temperature of the air to compensate for the losses rather than to waste the potential energy that has been stored in the air.

Similarly, if the TES 60 temperature were below the required temperature by 50°C (an extreme situation), the same analysis would give a potential wastage of 160 kJ/kg of air, while the thermal energy needed to redress the thermal energy deficit would be about 54 kJ/kg of air.

Case 2: This scenario is more likely to occur where the TES 60 comprises a packed bed of solid material granules or "pebbles". In this case, the air temperature at the inlet of turbine 58 tends to decrease as the cavern pressure decreases. In this scenario, the cavern 62 is to be discharged in "n" hours and, after "m" hours, the remaining temperature of the TES 60 is too low for efficient operation of the turbine 58. For the remaining "n-m" hours the options are either to vent air from the cavern or add thermal energy to it. In a first approximation, it is clear that the gain of adding thermal energy, such as through the combustion of natural gas, compared to venting compressed air, is in the same range of Case 1.

Case 3: In a third scenario, the energy of the compressed air is in an excess of, say, 10%, with respect to thermal energy of the TES 60, which is to say that 10% of air in the cavern 62 would remain after the TES 60 has run out of useful thermal energy. Without the present proposal, this situation would involve venting out 10% of the air that had been injected into the cavern 62 during the charging operation. Assuming an ACAES system that can store 1.5 GWh, a loss of 10% of air corresponds to a loss of production of about 10% of that energy, i.e. 150 MWh. Assuming the cavern 62 has a volume of 300 000 m³, and a pressure range of 50 to 80 bar, the total amount of air to be discharged is about 10*10^6 kg, thus 10% is 10*10^5 kg to be heated up from about 40°C (in the cavern) to, say 510°C (turbine inlet). This would require about 140 MWh (thermal energy) from natural gas. Thus an overall saving of energy would result from burning natural gas to heat the discharged air before the turbine inlet.

As previously mentioned, the combustor 56, or other energy input device, is preferably controlled by a control unit 57. To enable fine control of the energy input, such a control unit can interface with sensors to determine the temperature at any given time at one or more points in the system. For example, as indicated by reference Tᵢ, a sensor could advantageously be placed at the inlet of turbine 58 such that it is possible for the control unit to detect an insufficient temperature thereat and to raise that temperature by burning fuel or by other means.

A further sensor To may be located, for example, at an outlet of the turbine 58, such that the efficiency of turbine 58 can be optimized through adjustment of the inlet temperature. For example, if the turbine outlet temperature is too low, this would mean that the control unit would operate to increase the inlet temperature of the turbine 58 through increased heat output at the fuel burner 56.

It will be appreciated that the forgoing description of the ACAES system 50 relates to preferred embodiments only and that it is envisaged that various features thereof may be changed without departing from the scope of the attached claims. For example, the exact number of compression stages may be altered as necessary to obtain a desired pressure in the cavern, or in response to commercial availability or type of compressors. Also, it is envisaged that multiple TES units may be employed, one between each compression stage, or that less TES units could be provided than the number of compression stages. In such an instance, it is envisaged that a heat pump might advantageously be used to capture heat from one or more compression stages where a TES unit is not located at an output of that compression stage, to capture the thermal energy of the compressed air at an outlet of that compression stage, and to transfer it to one or more of the TES units.

The present disclosure does not advocate routine use of fuel burning or other thermal energy input means during operation of an ACAES system. Such measures should only be used selectively and judiciously, as a way of ameliorating waste of stored energy when a substantial energy imbalance exists in the system, as explained above.

The above embodiments have been described above purely by way of example, and modifications can be made within the scope of the appended claims. Thus, the breadth and scope of the claims should not be limited to the above-described exemplary embodiments. Each feature disclosed in the specification, including the claims and drawings, may be replaced by alternative features serving the same, equivalent or similar purposes, unless expressly stated otherwise.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. An adiabatic compressed air energy storage (ACAES) system including:
compressed air storage;
air compression means for charging the compressed air storage with compressed air;
thermal energy storage (TES);
turbine means for extracting useful work from the compressed air during discharge of the compressed air from the compressed air storage; and
energy balancing means for redressing an energy imbalance between the TES and a required amount of thermal energy to raise the temperature of a given volume of compressed air to a desired temperature upon discharge of the given volume of compressed air from the compressed air storage;
the energy balancing means comprising a thermal energy input device selectively operable to supply additional thermal energy to the given volume of compressed air after it has received thermal energy from the TES and before it expands through the turbine means, said additional thermal energy being supplied from a source external to the ACAES system, the amount of thermal energy added to the given volume of compressed air after it has received thermal energy from the TES being smaller than the amount of useful work obtained from the given volume of compressed air by the turbine means.

2. The ACAES system according to claim 1, wherein the thermal energy input device is arranged to add thermal energy directly to the compressed air.

3. The ACAES system according to claim 1, wherein the thermal energy input device is arranged to add thermal energy to the compressed air via heat exchange means.

4. The ACAES system according to claim 2, wherein the thermal energy input device comprises at least one of: (a) a combustor operable to burn fuel in the compressed air; (b) an electrical heating element; (c) a solar power source.

5. The ACAES system according to claim 3, wherein the thermal energy input device comprises at least one of: (a) a combustor operable to burn fuel externally of the pressurised part of the ACAES system; (b) an electrical heating element; (c) a solar power source; (d) a geothermal power source.

6. The ACAES system according to any preceding claim, further comprising means for temporarily interrupting thermal storage in the TES during charging of the compressed air storage.

7. The ACAES system according to any preceding claim, further comprising means for throttling input of compressed air to the TES during discharge of air from the compressed air storage.

8. The ACAES system according to any preceding claim, further comprising means for venting compressed air from the compressed air storage instead of discharging it through the TES.

9. A method of redressing an energy imbalance between thermal energy storage (TES) of an adiabatic compressed air energy storage (ACAES) system and a required level of thermal energy to raise the temperature of a given volume of compressed air to a desired temperature after the air has been discharged from compressed air storage of the ACAES system, the method comprising the step of selectively supplying additional thermal energy to the given volume of compressed air after it has received thermal energy from the TES and before it expands through turbine means of the ACAES system, said additional thermal energy being supplied from a source external to the ACAES system, the amount of thermal energy added to the given volume of compressed air after it has received thermal energy from the TES being smaller than the amount of useful work obtained from the given volume of compressed air by the turbine means.

10. The method of claim 9, wherein the step of selectively supplying additional thermal energy to the given volume of compressed air comprises adding thermal energy directly to the compressed air.

11. The method of claim 9, wherein the step of selectively supplying additional thermal energy to the given volume of compressed air comprises adding thermal energy to the compressed air via a heat exchange process.

12. The method of claim 10, wherein thermal energy is added by at least one of: (a) burning fuel in the compressed air; (b) electrically heating the compressed air; (c) heating the compressed air by solar power.

13. The method of claim 11, wherein thermal energy is added by at least one of: (a) burning fuel externally of the pressurised part of the ACAES system to heat an intermediate heat exchange medium; (b) electrical heating of an intermediate heat exchange medium; (c) solar heating of. an intermediate heat exchange medium

14. An ACAES system substantially as herein described with reference to and/or as illustrated in Figure 3.

15. A method of redressing an imbalance between thermal energy storage of an ACAES system and a required level of thermal energy to raise the temperature of a given volume of compressed air discharged from storage in the ACAES system, substantially as herein described with reference to and/or as illustrated in Figure 3.
